# EUROPEAN PATENT APPLICATION

(11) **EP 4 147 864 A1**
(43) Date of publication of application: **15.03.2023**
(21) Application number: 21195932.5
(22) Date of filing: 10.09.2021
(51) Int. Cl.: B29D 99/00, B29B 11/16, B29C 35/00, F27B 17/00, F27D 7/02, F27D 11/02

(54) **OVEN ARRANGEMENT AND METHOD FOR MANUFACTURING PREFORM BUILDING ELEMENTS**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Oven arrangement, adapted to heat preform building material (21) arranged on a plurality of transportable, plate-like carriers (20) for producing preform building elements (44) used for building a rotor blade of a wind turbine, comprising at least two oven units (2, 3, 15), wherein each oven unit (2, 3, 15) has a housing (4) adapted to receive one or more carriers (20) with at least one closable opening (5) for loading and unloading the carriers (20), wherein the housings (4) of the oven units (2, 3, 15) are stackable in such manner that the openings (5) are arranged above each other on one side of the stack, wherein each oven unit (2, 3, 15) comprises at least one heating means (33) and/or wherein each oven unit (2, 3, 15) is connectable to a mutual heat supplying means (7).

## Description

The invention relates to an oven arrangement, adapted to heat preform building material arranged on a plurality of transportable, plate-like carriers for producing preform building elements used for building a rotor blade of a wind turbine. Furthermore, the invention relates to a method for manufacturing preform building elements used for building a rotor blade of a wind turbine.

Wind turbines comprise a rotor with a plurality of rotor blades, generally for converting wind energy into electrical energy by means of a generator. Due to the enormous size of the wind turbine blades, their manufacturing is a major challenge in the manufacture of wind turbines. Normally, the wind turbine blades are fabricated from fiber-reinforced material involving the handling of large parts like fiber mats, in particular for casting the shell of the wind turbine blade.

One technology for facilitating the fabrication of the wind turbine blades is the usage of preforms, or preform building elements, respectively, which are preformed smaller blade parts or segments which are used for building the respective blade shell. These preforms are prefabricated separately and arranged and aligned according to the requested overall geometry of the blade in a blade mold for casting an entire rotor blade, or a larger rotor blade part, respectively.

Each preform, which usually has a slightly bended geometry with a length of for example 10 to 12 m and width of for example 3 to 5 m, is prefabricated in a specific mold. The mold comprises a respective form part, in which the preform building elements like fiber mats and an adhesive are arranged. Optionally, additional elements like core elements may be used as well. The core elements may be flexible elements, for instance flexible balsa wood plates, or rigid elements, for instance rigid sheets of polyethylene terephthalate (PET). These elements are fixed in the respective mold part by applying a vacuum in order to obtain a preform corresponding to the shape of the mold part. For fixation of the preform building material, a foil can be used to cover the components so that the vacuum may be applied to the space between the foil and the surface of the mold, on which the building material is arranged.

A consolidation of the preform building elements occurs by heating of the adhesive, which is arranged locally between the components of the preform building material to locally attach them towards each other. By the heating, the adhesive, or binding agent, respectively, is melted for locally fixating the fiber mats and the core elements by gluing them in the binder matrix provided by the molten binding agent. After this heating operation, when the preform building elements have been consolidated for forming the preform part, the preform needs to be cooled to be sufficiently stable to be handled by crane equipment or any other comparable handling or lifting means like a vacuum suction lifting equipment.

This way of producing the preforms is quite cumbersome. The molds used for producing the preforms are very complicated in the setup, especially as a heating system like heating blankets and heating pipes below the mold surface have to be used. In addition, also for the cooling, a cooling system may be required for avoiding long cooling durations leading to comparatively expensive preform molds. Since in each mold only a single preform building element may be fabricated and since for the fabrication of a wind turbine blade a large number of preform building elements is required, also a large number of molds is needed, usually twenty or more preform molds for enabling parallel fabrication of preform building elements required for the fabrication of one single wind turbine blade.

Further, as both the heating and cooling treatment is performed with the preform building elements respectively the hot preform being arranged in the mold, the mold is occupied. As both the heating and the cooling process takes a remarkable time, the whole mold is blocked during these long-lasting procedures and the productivity of the mold is extremely low.

This is even enhanced by the fact that the mold cannot be preheated. The temperature treatment needs to start from room temperature as all building elements need to be arranged separately in the mold before the vacuum fixation occurs and in particular before the binding agent is thermally activated. Further, it is necessary to cool the hot preform down to room temperature in order to secure its stability for handling it manually or with lifting equipment.

Further, the time during which the respective mold is occupied may even be extended since sometimes a preform is not removed immediately after cooling it, but remains for a certain time in the mold if no storing capacity is given. Finally, after the preform building element has been lifted out of the mold, it is necessary to clean the mold surface for the next manufacturing process, wherein also the cleaning step takes its time. Still the mold cannot be used, until this cleaning step is finished.

The invention is based on the objective problem to provide an improved oven arrangement which facilitates the manufacture of preform building elements used for building a rotor blade of a wind turbine.

According to the invention, this problem is solved by an oven arrangement as initially described, wherein the oven arrangement comprises at least two oven units, wherein each oven unit has a housing adapted to receive one or more carriers with at least one closable opening for loading and unloading the carriers, wherein the housings of the oven units are stackable in such manner that the openings are arranged above each other on one side of the stack, wherein each oven unit comprises at least one heating means and/or where in each oven unit is connectable to a mutual heat supplying means.

Each of the oven unit, which may also be referred to as a furnace unit, is adapted to heat the interior of its housing and therefore to heat the preform building material on the carrier, in particular for thermal activation of the binding agent in the preform building material. The oven units may be adapted to heat the interior of the housings to temperatures between 70°C and 130°C, depending on the type of binding agent used in the preform building material. For heating of the preform building material, each oven unit may comprise a heating means or the oven units of the oven arrangement may be connectable to one or more heat supply means of the oven arrangement, which supply heat to the individual oven units.

In particular, the oven units may be connectable to a mutual heat supplying means for heating the interior of their housings, in which each at least one carrier with the preform building material is receivable. The heat supplying means may be a part of the oven arrangement connected to the oven units for centralized generation of a heat. The heat supplied by the mutual heat supplying means to the individual ovens may be regulated individually for each of the oven units, so that individual processes of the oven units become possible.

The preform building material may include in particular one or more textile components, in particular fiber sheets or the like, and a binding agent for locally adhering the components. In addition to textile components, also rigid core elements, for instance balsa wood panels or struts, and further components, which are to be integrated in the structure of the preform building element to be fabricated, may be included.

The plate-like carrier may be a flat plate or it may be a tray comprising for instance a curved surface according to the shape of the preform building element to be fabricated. In particular, the plate-like carrier may comprise a concave or convex top surface. The plate-like carrier may be the molding surface of a preform mold. The preform mold may comprise for instance a mold frame, on which the carrier is supported during arrangement of the preform building material. After the arrangement, the carrier may be lifted from the frame and moved to the oven arrangement. Then, the carrier can be inserted in one of the oven units for heating of the preform building material, in particular for a thermal activation of the binding agent.

The housing of the individual oven units may have a cuboidal shape with six rectangular sides, respectively. This facilitates the stacking of the individual oven units above each other, so that their openings, which may be arranged each on a face side of the housing, are arranged above each other in order to facilitate the loading of the plate-like carriers. The opening may be on the longer or on the shorter side of a cuboidal shaped housing.

The size of the housings of the oven units and consequently also the size of the openings of the housings and/or the interior volumes of the housings accessible through the opening have a size comparable to the size of the preform building elements to be manufactured from the preform building material arranged on the plate-like carrier, or corresponding to the size of the plate-like carrier, respectively. In particular, the housing may have a width between 1 m and 4 m and a length between 2.5 m and 12 m. Also a larger width and/or a larger length of the housing is possible, so that a plurality of carriers arranged juxtaposed may be received in the housing.

The height of the oven units may depend on the height of the plate-like carrier with the preform building material arranged on it. It is possible that more than one carrier is insertable in one of the oven units, so that the height of the oven units can vary between 20 cm and 50 cm for receiving one single, flat plate-like carrier to several meters for oven units that are adapted to receive a plurality of carriers. It is possible that the oven arrangement only comprises oven units which are each adapted to receive one single carrier, so that each carrier with preform building material may be heated individually.

Preferably, all openings are arranged along the width direction of the housing, wherein all openings, or all housings, respectively, have the same width facilitating the loading and unloading of carrier elements with equal width. The height and the length of the housings of the oven units, however, may be different in order to account for different types and/or numbers of preform building elements to be fabricated in the respective oven unit.

By the oven arrangement comprising a plurality of oven units, a flexible adaption of the oven arrangement used for heating of the preform building material may be obtained. By stacking a plurality of oven units, the number of oven units of the oven arrangement can easily be adapted to the number of preform building elements, which are to be fabricated simultaneously. Furthermore, the adaption of process changes to the manufacture of the preform building elements is facilitated, since the number of oven units of the oven arrangement may easily be altered by adding an additional oven unit, or by removing an existing oven unit, respectively.

The usage of a plurality of oven units for heating the preform building material arranged on the plate-like carriers leads to a process time reduction in the manufacturing of the preform building elements, or the rotor blade, respectively. Advantageously, the preform building material may be arranged on the plate-like carriers prior to the heating, wherein the plate-like carriers are arranged in the at least two oven units or the oven arrangement, once the preform building material arrangement on the surface of the plate-like carrier has been finished. By using a plurality of oven units, an individual beginning and ending of the heating processes of the at least one carrier arranged in one of the oven units is possible. The usage of the individual carriers and the ability to heat the carriers individually has the advantage that simple preform mold can be used, in particular since no heating or cooling means have to be provided as part of the preform molds. Furthermore, a redesign of the mold is facilitated since only the carrier has to be adapted so that a complex reworking of an entire mold can be avoided.

The oven units of the oven arrangement work in particular independently from each other, so that the heating means of each oven unit and/or the amount of heat supply to each oven unit by the mutual heat supplying means may be adjusted independently from each other. This allows for an individual controlling of the heating processes in each of the oven units independently from the state of the further oven units of the oven arrangement. All heating processes in the oven arrangement may be controlled and monitored by a control unit of the oven arrangement connected to a plurality of sensors arranged in the oven units. Hence no manual work may be required to operate the oven. In addition, the process can easily be modified, if a heating process with other parameters like temperature, time, and/or air flow is desired.

The usage of the plurality of oven units has the advantage that no carriers, or heated preform building elements, respectively, have to be removed from a larger oven, in which further preform building elements are still heated. Advantageously, an unnecessary dissipation of heat can be avoided. Furthermore, unused oven units can be switched off, if their capacity is not needed during a manufacturing process. This reduces advantageously the energy consumption of the oven arrangement, or of the heating process step in the preform building element manufacturing, respectively, in particular when compared to a single oven used for heating all preform building elements to be manufactured, since the energy consumption of a large, single oven is more or less independent from the numbers of preform building elements to be heated.

In addition, a single oven must be dimensioned to be able to receive the largest carrier for fabrication of the largest required preform building element to be manufactured, so that there would be a large unneeded space in the oven when smaller preform building elements are manufactured. The usage of a plurality of oven units allows for using always the smallest possible oven unit for the individual preform building elements to be fabricated.

Furthermore, the ability to add or remove one oven unit reduces the equipment costs of the manufacturing process since the capacity of the oven arrangement may be adapted more precisely to the required number of parallelly heated preform building elements than the capacity of large ovens. For example, if a small capacity expansion is needed, a small oven is enough. It is therefore not necessary to purchase a large oven that will result in a large overcapacity. In addition, the individual oven units are easy and fast to produce, which further reduces the costs associated with the preform building element manufacture.

The small oven units also facilitate manufacture and service of the oven arrangement so that a further reduction of the process costs may be achieved. The ability to easily replace a defective oven unit reduces both maintenance costs and down time of the oven arrangement. Accordingly, the production is less sensitive to oven failures with smaller but more oven units.

Preferably, each housing comprises at least one attachment means on a bottom side of the housing and/or on a top side of the housing, wherein the attachment means fixates the stacked oven units against each other. By providing attachment means on the bottom side and/or on the top side of the housing, two oven units directly stacked above each other may be fixated at least against a lateral movement so that the stack of housings can be stabilized. Attachment means may comprise mating means and/or guiding means which ease the stacking of the oven units and which prevent the ovens from sliding relatively to each other once placed on top of each other.

In an embodiment, each housing comprises two closable openings, which are arranged on opposing sides of the housing. This advantageously allows for removing the carriers from the opposing side and therefore to speed up the loading and/or unloading process, advantageously reducing the amount of heat which is lost from the interior of the oven unit. In particular in a continuous manufacturing process, a carrier can be loaded from a first side of the oven unit while removing another carrier from the interior of the housing through the opening at the second, opposing side of the oven unit.

Preferably, the heating means comprises at least one resistive heating means, at least one radiating heating means, at least one heating means based on a circulating liquid, and/or at least one convection means and/or the heating means is adapted additionally for a cooling of an interior of the housing.

A radiating heating means may be an ultraviolet, visible or infrared light lamp arranged in the interior of the housing. By using radiating heating means, a spatial temperature control in the interior of the oven may be attained, so that different amount of heat may be supplied to different portions or zones of the preform building element to be fabricated, or to the carrier the interior of the housing, respectively. This allows for heating some parts or portions of the preform building element to be fabricated for a different time and/or with a different heat input, for instance to account for thicker portions that require more heat exposure than thinner portions.

A resistive heating means comprises one or more resistive structures, which allow for an electrical heating of the interior of the housing. It is possible that the resistive heating elements are arranged in the walls of the housing.

The heating means may comprise at least one convection means, for instance a fan. The convection means may be used for causing and/or increasing convection, or air movement, respectively, in the interior of the housing to provide a more uniform heating of the preform building material on the carrier.

The heating means may comprise at least one heating means based on a circulating liquid, for instance a liquid circulating in pipes in the housing, or arranged on at least one inner wall and/or on at least one outer wall of the housing. The liquid may be heated using a heating device of the oven unit or a further heating device of the oven arrangement, which is connected to the oven units, for instance by connection means like flexible pipes, tubes or hoses.

Optionally, the heating means may also be adapted for a cooling of the interior of the housing, hence, the heating means may also comprise cooling means for cooling the interior. This allows for using the oven unit also for an active cooling of the preform building material after a heating process. For instance, a heating means based on a circulating liquid may be used for cooling by the circulation of a cooled liquid. In addition also other cooling means, for instance electrical cooling means or an air conditioning device comprising a compressor, may be used.

In an embodiment, the heat supplying means is a hot air supplying means, wherein the housing of each oven unit comprises at least one air inlet, through which hot air generated by the heat supplying means is suppliable to the interior of the housing, and at least one air outlet, through which hot air supplied to the interior of the housing is emittable to the surroundings of the oven unit and/or returnable to the heating means.

The usage of a mutual heat supplying means as a common heat source for all oven units has the advantage that the heating process can be conducted more efficiently and therefore with a reduced energy consumption. By the air inlets and/or the air outlets of the housings, the amount of air supplied to the interior of the individual oven units may be adjustable. By using the air outlets to return the hot air after the streaming through the housing to the heating means, a further energy consumption of the heating process may be obtained since the warm air emitted from the housing may be reheated und resupplied to the interior again. Alternatively, the hot air may be emitted to the surroundings through the air outlet, which may be provided in this case as an opening, in particular a closeable opening, in the housing.

Preferably, each oven unit comprises a regulation means for regulating the temperature and/or the flow rate of the air provided to its air inlet. This allows for adjusting the amount and/or the temperature of the air, which is supplied to the interior of the housing of the individual oven units. The regulation means may comprise a further heating means to provide additional heat to the air and/or one or more adjustable valves, which allow to adjust a flow rate of the hot air supply by the mutual heat supplying means of the oven arrangement. By regulating the temperature and/or the flow rate of the air provided to the air inlet, the temperature in the interior of the housing may be adjusted. The regulation means may also be adapted to stop or shut off the air flow and therefore to prevent the further heating in oven unit, for instance when the respective oven unit of the oven arrangement is not used in the current manufacturing process, or when the preform building element fabricated in the oven unit has already completed the scheduled heating duration.

In an embodiment, the air inlets and the air outlets are arranged at opposing sides of the housing and/or at opposing edges of a housing side. By providing the air inlets and the air outlets at opposing sides and/or at opposing edges of the housing, an air flow through the entire interior of the housing can be established. This allows for providing a more or less equal heat distribution in the interior of the housing and therefore to evenly heat the preform building material arranged in the housing.

Preferably, the air inlets and/or the air outlets are each arranged on the same side of the stacked oven units. Advantageously, this facilitates the connections of the oven unit to the heat supplying means, since for instance the pipes, tubes or hoses used for connecting the air inlets and/or the air outlets to the heat supplying means can be arranged on the same side of the oven units stack reducing the required floor space of the oven arrangement in a production facility. It is possible that the air supply can be done by means of a flexible connection means like a hose mounted in the middle of a door or a cover of the openings. The connection means can be disconnected when preform elements are inserted or taken out of the oven.

In an embodiment, the oven arrangement comprises at least one flow reverse means to invert the air flow between the air inlet and the air outlet of at least one of the oven units. The flow reverse means may be part of each oven unit, so that the flow may be reversed individually for the oven units. In addition or alternatively, the flow reverse means may be part of the heat supplying means or a separate component of the oven arrangement allowing for adjusting the air flow for all oven units simultaneously.

Reverting the air flow between the air inlet and the air outlet, hence providing the air to the oven unit through the air outlet and removing the air from the oven unit through the air inlet allows for an even heat distribution on the building material arranged on the carriers inside the oven units since the temperature gradient of the hot air in the interior of the housing may be inverted by providing a reversed air flow. Preferably, the direction of the air flow in the housing of each oven unit is inverted at least once during the heating of the respective preform building material. How the preform building material is laid out on the carrier depends on the geometry of the preform building element to be manufactured. It is possible that towards one end of the carrier more material and/or thicker material is arranged. This means the element requires more heating at the thicker end than at the thinner end. By using the air flow reverse means, the ends may be heated differently so that the different thicknesses may be taken into account.

Preferably, the air inlets and/or the air outlets are arranged at a cover of the or a closeable opening and/or at an edge surrounding the or a closeable opening, wherein at least one air stream guiding means is arranged in the interior of the housing in between the air inlets and/or the air outlets and a receiving space, in which a received carrier is arranged. By the air stream guiding means, the air supplied to the air inlets and/or the air outlets may go over and/or underneath the carriers arranged in the oven unit. If one carrier is arranged in the oven unit, the air stream may be guided above a surface of the carrier, or above the preform building material arranged on the carrier surface, respectively, and/or underneath a carrier. By the air guiding means, in particular a laminar airflow is crated so that an even heat distribution can be obtained.

To provide the oven units as short as possible, the air inlets air inlets may be arranged in particular at an edge surrounding the closable opening. In addition, also the air outlets may be arranged at an edge surrounding a further opening, in particular on an opposing side of the first opening. It is possible that the air stream guiding means is arranged between the air inlets and the receiving space, or the receiving volume, respectively, in which the received carrier is arranged. This allows for guiding the air supplied through the air inlet. In particular when also a reversed flow is possible, the air outlets may be arranged on a side and/or an edge on the opposing end of the housing, wherein an additional air stream guiding means is arranged between the air outlets and the receiving space, so that also the air flow of air provided through the air outlets, for instance due to an inverted flow created by a flow reverse means, may be guided above and/or underneath the at least one carrier in the interior of the housing.

In an embodiment, the air stream guiding means is a plate, wherein the plate is removably attached to the housing, wherein the plate comprises a plurality of slots, in particular for creation of a laminar air flow in the receiving space. The plate may be removable through the opening, so that the plate may be removed prior to a loading of the carrier and/or prior to an unloading of the carrier to allow for a movement of the carrier through the opening of the housing. In addition or alternatively, the plate may be attached to the housing using a hinge, so that the plate can be pivoted to allow for inserting and/or removing of the carrier. The vertical distance between the slots in the plate may correspond to the thickness of the carrier arrangeable in the interior of the housing, so that an air stream over the top surface of the carrier and an air stream underneath the carrier can be created.

In an alternative embodiment, the air stream guiding means is a guiding plate with a plurality of slots, in particular for creation of a laminar airflow in the receiving space, wherein the guiding plate is attached to a removable cover of the opening in a distance to a cover plate of the cover for closing the opening, wherein the air inlets, or the air outlets communicate with the space between the guiding plate and the cover plate. This has the advantage that when the opening is opened for loading and/or unloading of the carrier, for instance by pivoting the cover, also the slotted plate of the air stream guiding means is pivoted and therefore does not obstruct the opening. The air supplied by the air inlets or the air outlets, respectively, is supplied to a volume in between the slotted plate and a cover plate so that the air provided by the air inlet, or the air outlet, respectively, is guided through the slots in the receiving space, in particular for creating a laminar air flow above and/or underneath the carrier in the oven unit.

In an embodiment, each housing comprises at least one receiving means adapted to receive at least one carrier. In particular, each housing may have exactly one receiving means for receiving exactly one carrier. Alternatively, also more receiving means may be provided in one housing so that more than one carrier can be arranged in the respective oven unit. The receiving mean may be attached to the housing, in particular to the inner walls of the housing adjacently to the receiving space. Alternatively, the receiving means may be attached to a frame structure or a skeleton, which is removable from the interior of the housing. This has the advantage that the receiving means can easily be repaired or changed, in particular depending on the type of preform building element to be fabricated in the oven unit.

Preferably, the receiving means comprises at least one pair of rails for guiding the edges of the carrier and/or the receiving means comprises a plurality of rollers, in particular rollers attached to wires spanned in the interior of the housing between two opposing sides of the housing. The rails may be attached to the inner walls of the housing so that the edges of the carriers may engage in the rails for sliding the carriers in and/or out of the housing.

In addition or alternatively, the receiving means may be provided as a plurality of rollers, on which the carrier, in particular a bottom side of the carrier, may be rolled into the housing, and/or removed from the housing, respectively.

Preferably, the rollers are attached to wires, wherein the wires are spanned in the interior of the housing between two opposing sides of the housing. In particular, the wires are spanned at least approximately perpendicular to the direction, in which the carrier is loaded and/or unloaded. Providing rollers attached to wires allows for an adaption of the rollers to a shape of the carrier, so that differently shaped carriers can be inserted in the housing. The rollers attached to the wires may adapt to both flat carriers and to curved carriers, for instance to carriers with a convex bottom side. Furthermore, the rollers may also adapt to different radii of curved carriers.

In an embodiment, the stack of oven units is arranged on at least one movable transportation means, in particular on a rack with wheels. This allows for adapting the position of the oven arrangement, in particular regarding the needs of the preform building element manufacture and/or the wind turbine rotor blade manufacture using the preform building elements. Advantageously, the oven arrangement may be arranged as close as possible to the final destination of the finished preform building elements, for instance at a storage location or at a blade mold for the fabrication of a rotor blade using the preform building elements. This allows for reducing the transportation distances of the manufactured preform building elements so that the rotor blade manufacturing process time may be reduced and the risk of transportation damages of the preform building elements may be minimized.

Preferably, at least one of the oven units comprises a modular housing comprising two or more housing segments removably attached to each other. By providing at least one modular housing, the length of the housing may be adjusted by adding and/or removing housing segments. The housing segments may be bolted or joint together by other means. It is possible that a sealing is arranged in between two housing segments to avoid the leaking of hot air from the interior of the housing.

The modular housing may comprise two end segments, which form a closed housing. One or both of the end segments may comprise an opening for loading and/or unloading of the carrier. In addition, one or more intermediate segments may be provided in order to adjust a length of the housing and therefore to adapt the oven unit to differently shaped carriers for the manufacturing of varying preform building elements.

It is possible that all segments are provided with two openings and corresponding covers attached to two opposing sides, wherein the covers can be removed from the housing in order to connect one or more of the housing segments together and to allow for an unobstructed air stream through the interior of the housing. This allows for using the segments either as an end segment or as an intermediate segment.

In addition, a modular construction of the housing facilitates dismantling of the oven unit and facilitates the transport of the oven unit, or the entire oven arrangement, respectively, for instance if the oven is transported in a standard container. Thus, an oven unit can easily be sent to another location, for instance to a factory that needs an additional oven unit or a replacement oven unit, respectively.

Adapting the length of the oven unit to the requirements of a manufacturing process has the further advantage that shorter oven units are easier to be serviced and long oven units. In addition, shorter oven units are also easier to manufacture. If one oven unit is taken out for service it can easily be replaced by another oven unit and the complete oven arrangement is quickly brought back to operating condition.

A method according to the invention for manufacturing preform building elements used for building a rotor blade of a wind turbine comprises the steps of:
- Providing preform building material on a plurality of transportable, plate-like carriers,
- Loading the plurality of carriers with the arranged preform building material into an oven arrangement comprising a plurality of oven units, wherein at least one carrier is arranged in each of the oven units, and
- Heating the preform building material in each oven unit for a duration and/or with a temperature or temperature profile assigned to the preform building material in the oven unit.

Preferably, an oven unit according to the invention is used.

All details and advantages described in relation to the oven arrangement according to the invention apply correspondingly to the method according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an oven arrangement according to the invention,
- Fig. 2: a stack oven units of the oven arrangement according to the invention,
- Fig. 3: a detailed view on the air stream guiding means of an oven unit of the oven arrangement according to the invention,
- Fig. 4: an alternative embodiment of an air stream guiding means for an oven unit of the oven arrangement according to the invention,
- Fig. 5: an alternative embodiment of a receiving means for an oven unit of an oven arrangement according to the invention,
- Fig. 6: a schematic depiction of an air flow reverse means of an oven arrangement according to the invention,
- Fig. 7: a first alternative embodiment of an oven unit of the oven arrangement according to the invention,
- Fig. 8: a second alternative embodiment of an oven unit of the oven arrangement according to the invention,
- Fig. 9: an embodiment of a modular oven unit for an oven arrangement according to the invention, and
- Fig. 10: a schematic illustration of a method for manufacturing preform building elements used for a rotor blade of a wind turbine according to the invention.

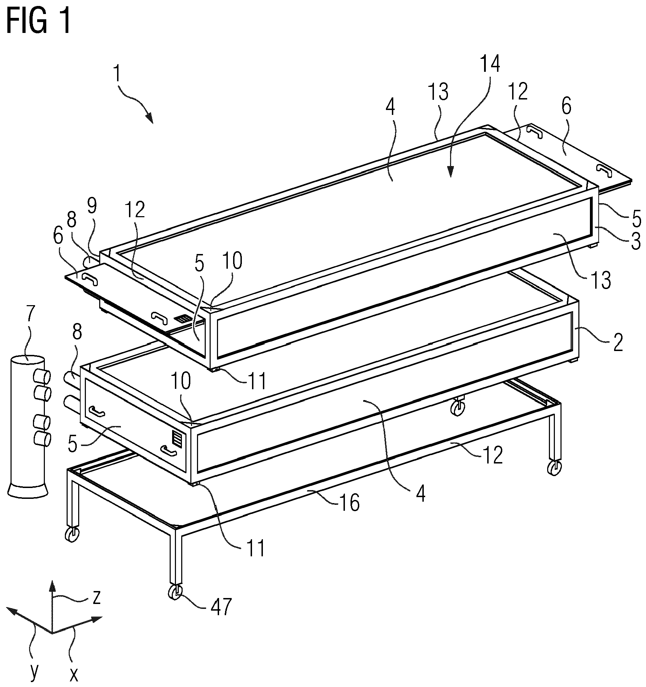

In fig. 1, an embodiment of an oven arrangement 1 is shown. The oven arrangement 1 comprises a plurality of oven units 2, 3 adapted to heat preform building material arranged on a plurality of transportable, plate-like carriers for producing preform building elements used for building a rotor blade of a wind turbine.

Each of the oven units 2, 3 comprises a housing 4 which is adapted to receive one or more of the carriers, on which the preform building material is arranged. Each housing 4 comprises at least one closable opening 5 for loading and unloading the carriers. The openings 5 are each closable by a cover 6, or a lid, respectively, which is hinged to the corresponding side of the housing 4. The cover 6 is shown for the upper oven unit 3 in an open position and for the lower oven unit 2 in a closed position. In an alternative to the hinged cover 6, the cover 6 may also be a double hinged door hinged to two opposing edges that surround the opening 5. In another alternative, the cover 6 may be a slidable door arrangement, which may be slit for instance up, down and/or sideways.

The housings 4 of the oven units 2, 3 are stackable in such manner that the openings 5 are arranged above each other on one side of the stack. In addition, the housings 4 may comprise each a further opening 5 at the opposing side to the opening 5, as schematically indicated by the open lid 6 of the upper oven unit 3. The individual oven units 2, 3 are preferably loaded each with a carrier supporting preform building material for manufacturing a preform building element at one end, wherein the is taken out from the opposite end of the oven after the heating process. This allows for an easier flow of preform building elements through the oven units. Thus, at one end of the oven arrangement 1, the packed preform building material is prepared and/or stored, and at the other end the baked preform building elements are stored or moved elsewhere for cooling.

For heating preform building material loaded into the oven units 2, 3, each oven unit is connectable to a mutual heat supplying means 7. The heat supplying means 7 is schematically depicted as a pipe, wherein hot air may be provided by heat supplying means 7. The heat supplying means 7 may comprise a means for heating air (not depicted), wherein the heat created by the heat supplying means 7 is provided to the housings 4, in particular by hot air provided through the heat supplying 7 connected to the housings 4. For establishing a connection to the heat supplying means 7, the housings each comprise one or more air inlets 8, which are arranged on an edge 9 that surrounds the opening 5 of the housing 4. The air inlets 8 may be connected to the heat supplying means 7 for instance by a connection means like pipes, hoses or tubes, so that the hot air generated by the heat supplying means 7 is introduced in the interior of the housings 4.

Each of the housings 4 comprises a plurality of attachment means 10, 11, wherein the attachment means 10 on the top side of the housings 4 are provided as receptors, in which the attachment means 11 provided as protrusions or guiding pins can be engaged. The attachment means 10, 11 facilitates the stacking of the oven units 2, 3 and fixate the individual oven units 2, 3 against each other, in particular in lateral direction.

The housing 4 are cuboidal and comprise six rectangular sides 12, 13, 14. The openings 5 may be arranged at the smallest sides 12, so that the carriers may be loaded through the opening 5 at one side 12 and removed through the opening on the opposing side 12 after heating of the preform building material. Alternatively, the openings 5 may also be provided at one or both longer sides 13 so that the loading and/or the unloading occurs via the sides 13.

The oven units 2, 3 are adapted to receive each at least one carrier with preform building material arranged on it, wherein from the preform building material on a carrier one preform building element for the fabrication of a wind turbine rotor blade is manufactured. The oven units 2, 3 are used for heating the preform building material, in particular for thermal activation of a binding agent used for locally adhering the further components of the preform building material together. The further components include in particular one or more textile layers of fiber material, for example glass fibers, carbon fibers and/or aramid fibers. Optionally, also rigid core components, for instance panels or struts of balsa wood or the like, may be provided as parts of the preform building material. Therefore, the oven units 2, 3 require a size corresponding to the preform building elements to be manufactured.

The oven units 2, 3 may have a length in x-direction between 2,5 m and 12 m or more. the width of the oven units 2, 3, or of their housing 4, respectively, in y-direction may be between 1 m and 4 m or more. The height of the oven units 2, 3, or of their housings 4, respectively, may be between 20 cm and 1 m or more, depending on the number, the shape and/or the size of the carriers and/or the preform building material to be received in the interior of the housing 4.

In addition, the oven arrangement 1 may comprise a rack 16 with wheels 47, on which the oven units 2, 3 are stacked. This allows for moving the oven arrangement 1 within the production facility in order to shorten the transportation routes of the carriers with the preform building material and/or the preform building elements after heating. Also the rack 16 may comprise receptors as attachment means 10 for mating with the attachment means 11 at the bottom side of the oven unit 2.

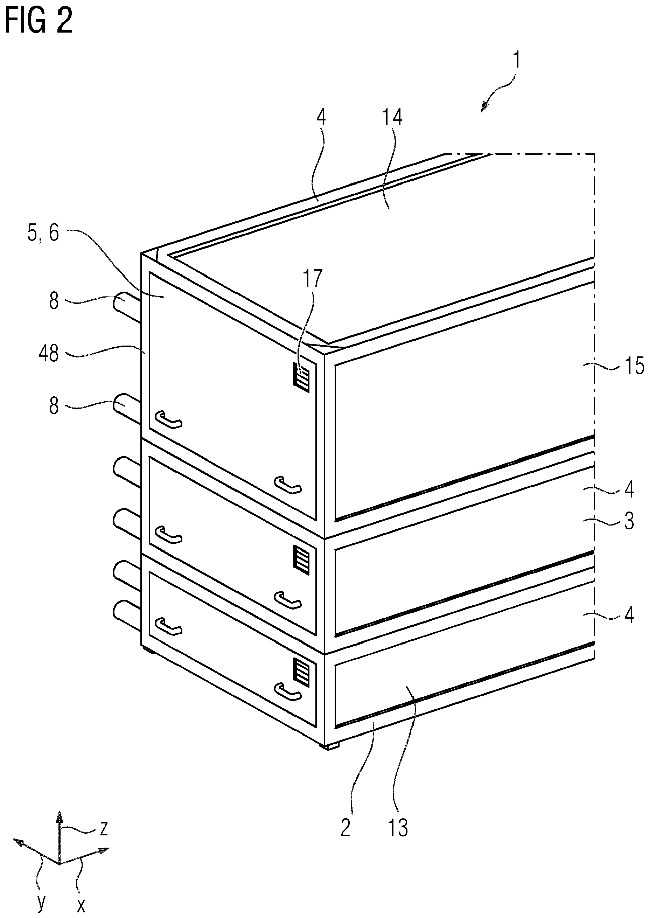

In fig. 2, a stack of three oven units 2, 3, 15 is shown. The topmost oven unit 15 comprises a housing 4 with a larger height in z-direction. It is possible that in the oven units 2, 3 one carrier unit per oven unit may be arranged and that in the top oven unit 15 two carriers are receivable. Besides different heights in z-direction, also the length of the oven unit in x-direction may vary to account for different shapes of preform building elements to be fabricated. Preferably, the oven units 2, 3, 15 are stacked beginning with the oven unit 2, 3, 15 with longest housing 4, wherein the further oven units 2, 3, 15 are stacked with decreasing length.

Also when the over unit 2, 3, 15 exhibit different lengths, the housings 4 are arrangeable in such manner that the openings 5, at least at one side 12 of the housings 4, are arrangeable above each other for facilitating the loading and the unloading of the carriers inside the housings 4. Furthermore, the air inlets 8 for connection of the housing 4 to the heat supplying means 7 are arranged on the same side 12, 13 of each housing 4 so that also the air inlets 8 are arranged above each other on the same side 48 of the stack of oven units 2, 3, 15. In particular, the air inlets 8 may be arranged at or close to an edge of the housing 4 surrounding the opening 5, or the further opening 5 at the opposing side 12, respectively, for enabling an air flow through at least almost the entire interior of the housing 4.

The carriers and/or the preform building material arranged on the carriers in the interior of the housings 4 are heated by hot air supplied by the heat supplying means 7 through the air inlets 8. To account for different temperature profiles and/or for different heating times, the temperature of the supplied air and/or the air flow supply to each of the housings 4 of the oven units 2, 3, 15 may be adapted individually. Therefore, each of the oven units 2, 3, 15 may comprise a control unit 17 and/or a control panel for entering of the respective process data.

In additional or alternative, also a remote control of the oven arrangement 1 from a central control unit (not depicted) of the oven arrangement 1, which is arranged for instance in a remote position, is possible. The temperature in each of the housings 4 may be adjusted by a regulation means (not depicted) for regulating the temperature and/or the flow rate of the air provided to its air inlets 8. The temperature may be adapted for instance by providing an additional heating means (not depicted) at the air inlets 8. The flow rate may be adjusted by one or more valves connected to the air inlets 8 in order to regulate the flow rate of the air provided to the air inlets 8 of the respective housing 4.

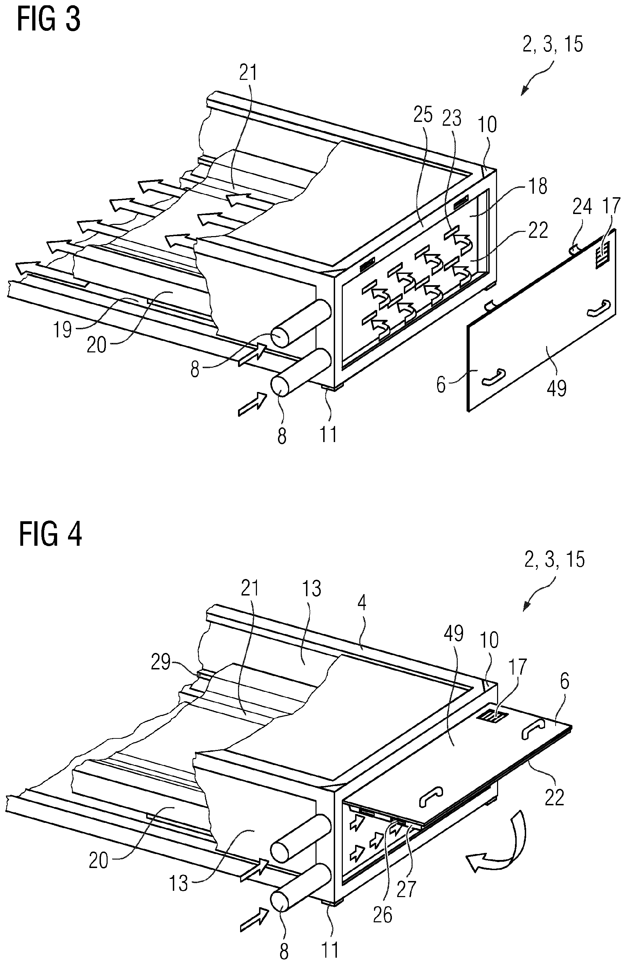

In fig. 3, a detailed view on one of the oven units 2, 3, 15 of the oven arrangement 1 is shown. In order to establish an even heating, the housing 4 may comprise at least one air stream guiding means 18, which is arranged in the interior of the housing 4 between the air inlet 8 and a receiving space 19, in which a received carrier 20 is arranged. On a top surface of the carrier 20, preform building material 21 is arranged. The preform building material 21 may comprise one or more layers of a textile material, for instance glass fibers or the like, and/or one or more rigid core components, wherein different components of the preform building material 21 are to be attached by using a binding agent. The binding agent is heat activated using the oven unit 2 so that the different components of the preform building material 21 are locally adhered to each other forming a preform building element to be used in the manufacture of a wind turbine rotor blade. The preform building material 21 may be covered by a vacuum foil or it may be arranged inside a vacuum bag (not depicted) to maintain the arrangement of the components of the preform building material 21 on the top surface of the carrier 20.

For providing an even heating of the preform building material 21, the air stream guiding means 18 is provided as a plate 22 with slots 23, wherein the plate 22 is arranged in between the receiving space 19 and the air inlet 8. The hot air from the air supplying means 7 is supplied in the space in between the plate 22 and a removable cover plate 49 of the cover 6 releasably attached to the housing 4 for covering the opening 5. Also the plate 22 is releasably attached to the housing 4 so that it may be removed for loading and/or unloading the carrier 20. The cover 6 of the opening 5 may be attached for instance by one or more hinges 24 that may engage into an edge 25 of the housing 4.

As indicated by the arrows, the hot air provided through the air inlets 8 passes through the slots 23 and is therefore guided both above and/or underneath the carrier 20 and/or the preform building material 21, respectively. By the air guiding means, in particular a laminar air flow above and/or underneath the carrier 20 may be created.

In an alternative embodiment depicted in fig. 4, a guiding plate 50 is attached to the cover 6, wherein the hot air supplied through the air inlets 8 is provided in the space between the guiding plate 50 and the cover plate 49 through corresponding slots 26 in a sidewall 27 of the cover 6. Also in this embodiment, the plate 22 comprises the slots 23 providing the air above and/or underneath the carrier 20 and the preform building material 21.

One further advantage of the hot air supply provided at the air inlets 8 arranged close to one end of the oven unit 2, 3, 15, is that when the door to the oven is opened, for instance for inserting or removal of a carrier, the air flow provided through the air inlets 8 acts as an airlock or a hot air curtain 51 and will thus prevent the already heated oven unit 2, 3, 15 from releasing the hot air within it - and thus leave the oven unit 2, 3, 15 ready for the next preform building element to be baked much quicker without the need to reach the desired temperature.

The housing 4 of the oven units 2, 3, 15 further comprises a receiving means 28, which is provided in this embodiment as rails on the inner walls on the sides 13 of the housing. For loading and/or unloading the carrier 20 into the housing 4, the edges of the carrier 20 may be guided on the receiving means 28. This allows for receiving differently shaped carriers 20, for instance carriers 20 with a flat top surface or carriers 20 with a concavely or convexly bent shape. The carriers 20 are used as molds, or mold carriers, respectively, for the fabrication of the preform building elements, since the preform building material is attached in the oven units 2, 3 on the top surface of the carrier 20, so that a preform building element which is fabricated from the consolidated preform building elements adapts to the shape of the top surface of the carrier 20. In this embodiment, the carrier 20 has bent edges which facilitate the usage of the carrier 20 as a mold surface supportable by mold frame for the arrangement of the preform building material. The guiding of the carrier 20 in the rails provided as receiving means 28 occurs at opposing edges of the carrier 20 along the length direction of the housing 4.

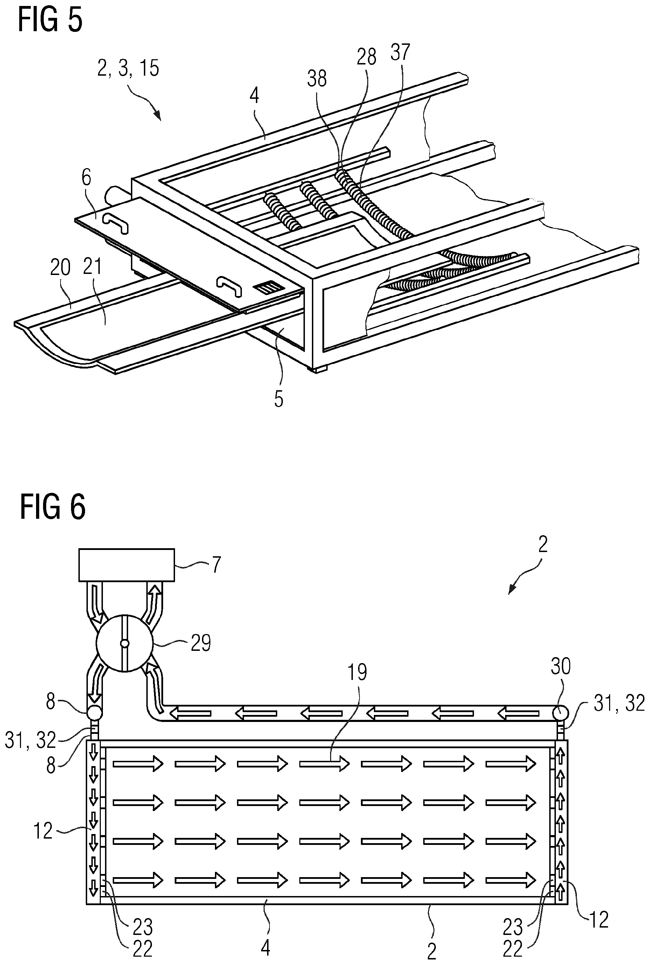

In fig. 5, an alternative embodiment for a receiving means 28 is shown. In this embodiment, the receiving means 28 is provided as a plurality of rollers 37, which are arranged on wires 38 and the carrier 20 is provided as a flat plate with a concave top surface, or a convex bottom side, respectably. The wires 38 are arranged along the width direction of the housing 4, so that a carrier 20 may be slid along the rollers 37 for loading or unloading. By providing the rollers 37 attached to the wires 38, the receiving means 28 may adapt to different shapes of the carrier 20. Hence, both flat carriers 20 and curved carriers 20, in particular with a concave or convex bottom side, may be inserted in the housing 4.

The rollers and wires, or the rails, respectively used as the receiving means 28 may be attached to a frame structure or a skeleton, which is removable from the interior of the housing 4. This has the advantage that the receiving means 28 can easily be repaired or changed, in particular depending on the type of preform building element to be fabricated in the oven unit 2.

To further improve an even heating of the preform building material 21, the oven arrangement 1 may comprise a flow reverse means 29, with which the air flow through the air inlets 8 and to additional air outlets 30 on an opposing side of the housing 4 may be inverted.

In fig. 6, a schematic depiction of an air flow reverse means 29 connected to both the heat supplying means 7 and the housing 4 is depicted. The housing 4 comprises the air inlets 8 as described in the forgoing as well as a plurality of air outlets 30 on the opposing side 12 of the housing. By providing the air inlets and the air outlets 30 on opposing sides of the housing 4, an air flow through the entire interior volume of the housing 4 may be created as indicated by the arrows. On both sides of the housing 4, an air stream guiding means 22 is provided between the receiving space 19 and the air inlets 8, or the air outlets 30, respectively. The position of the slots 23 of the air guiding means 18 is shown. As indicated by the plurality of arrows, a laminar flow in the interior of the housing 4, in particular in the receiving space 19 for receiving the carrier 20, is obtained.

By the flow reverse means 29, the air flow may be reversed so that the hot air generated by the heat supplying means 7 is provided to the air outlets 30 and streams through the interior of the housing 4 to the air inlets 8 and hence opposite to the depicted arrows to the air inlets 18. The air outlets 30 are also connected to the heat supplying means 7 to resupply the hot air emitted from the interior of the housing 4 to the heat supplying means 7, so that it may be reheated and again provided to the air inlets 8, or to the interior of the housing 4, respectively. This advantageously decreases the amount of energy used for heating of the preform building material 21 in the oven units 2, 3, 15.

Both to the inlets 8 and to the outlets 30, a regulation means 31 provided as a valve 32 is attached for adjusting the air flow and therefore the heat input in the preform building material 21. It is possible that the regulation means 31 is controlled by a control unit of the oven arrangement 1 for an automated heating in the individual oven units 2, 3, 15. When no flow reverse means is used, the hot air may be emitted to the surroundings through the air outlets 30, which may be provided in this case each as an opening, in particular a closeable opening, in the housing 4.

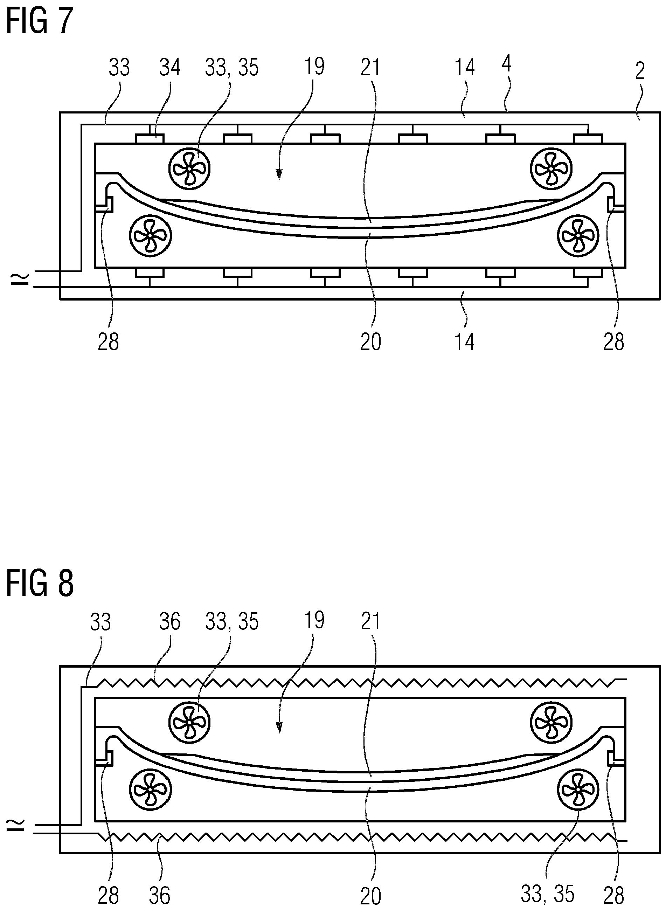

In fig. 7, an alternative embodiment of an oven unit 2, 3, 15 is shown. In this embodiment, the oven unit 2, 3, 15 comprises a heating means 33, wherein the heating means 33 comprises a plurality of radiating heating means 34. The radiating heating means 34 may be ultraviolet, visible or infrared lamps for heating the preform building material 21 on the carrier 20. In addition, the heating means 33 comprises a plurality of convection means 35, which are provided as fans, for distributing the hot air evenly in the interior of the housing 4. By arranging a plurality of radiating heating means 34 in the housing 4, for instance in the sides 12, 13 or in the top and the bottom sides 14 of the housing 4, respectively, different heating zones for the preform building material 21 and/or the carrier 20 may be created by individual switching on and off the radiating heating means 35.

In fig. 8 a further embodiment of the oven unit 2 is shown. In this embodiment, the oven unit 2 comprises a heating means 33 which comprises a plurality of resistive heating means 36. The resistive heating means 36 are arranged in the walls of the housing 4, for instance in the sides 14 which form the top side and the bottom side of the housing 4. In addition or alternatively, the resistive heating elements 36 may also be provided at the other sides of the housing 4, at the outside of the housing 4 and/or on the inner walls of the housing 4 facing towards the receiving space 19. Also with the resistive heating means 36, different heating zones may be established, as previously described.

Additionally or alternatively, the heating means 33 may comprise at least one heating means based on a circulating liquid, for instance a liquid circulating in pipes in the housing 4, or arranged on at least one inner wall and/or on at least one outer wall of the housing 4. The liquid may be heated using a heating device of the oven unit 2, 3, 15 or a further heating device of the oven arrangement 1, which is connected to the oven units 2, 3, 15, for instance by connection means like flexible pipes, tubes or hoses.

Optionally, the heating means 33 may also be adapted for a cooling of the interior of the housing 4, hence, the heating means 33 may also comprise cooling means for cooling the interior. This allows for using the oven units 2, 3, 15 also for an active cooling of the preform building material 21 after a heating process. For instance, a heating means 33 based on a circulating liquid may be used for cooling by the circulation of a cooled liquid. In addition, also other cooling means, for instance electrical cooling means or an air conditioning device comprising a compressor, may be used.

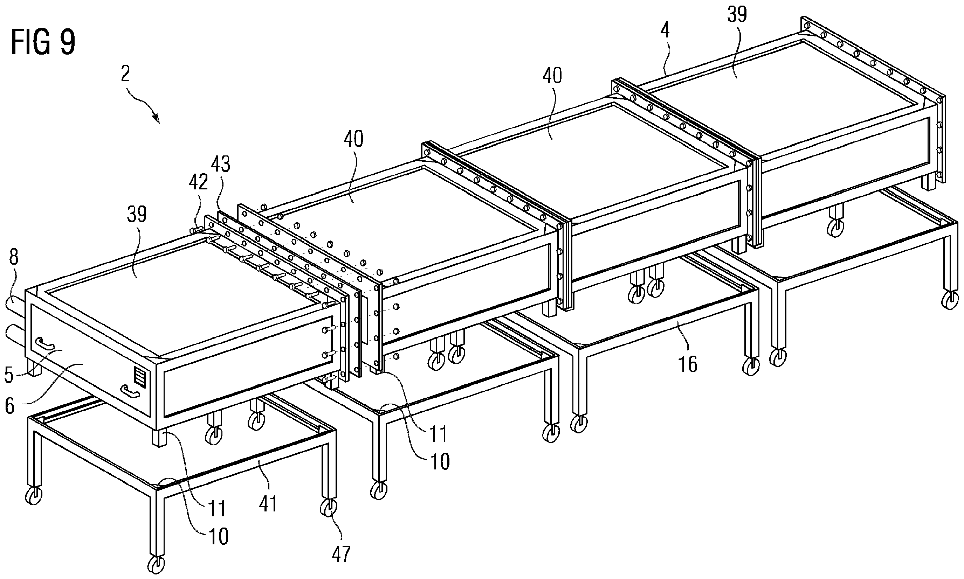

In fig. 9, a further embodiment of an oven unit 2, 3, 15 is shown, in which the housing 4 of the oven unit 2, 3, 15 is provided as a plurality of housing segments 39, 40. The housing segments 39 are end-side housing segments, which each comprise the opening 5 and the cover 6 closing the opening 5. The housing segments 40 are intermediate segments, which may be added in between the end segments 39 and/or removed from the housing 4 in order to adapt the length of the housing 4 to the preform building elements to be fabricated.

To allow for further adaption, also the rack 12, on which the oven unit 2 is arranged, may be segmented in different rack segments 41, so that also the size of rack may be adapted to the size of the oven unit 2. Alternatively, all segments 39, 40 may be provided with openings 4 and/or with covers 6, which may be attached to the sides 12 of the segments 39, 40, so that all segments 39, 40 may be used in any position of the segmented housing 4.

Also the air inlets 8 and/or the air outlets 30 may be attached releasably to the housing 4, so that they may be removed when they are not required for the supply or the emittance of air, respectively. The housing segments 39, 40 may be attached for instance by a plurality of bolts 42, which allow for attaching the segments 39, 40 towards each other. It is possible, that in between two adjacent segments 39, 40 a sealing 43 is arranged in order to avoid hot air from escaping the interior of the housing 4.

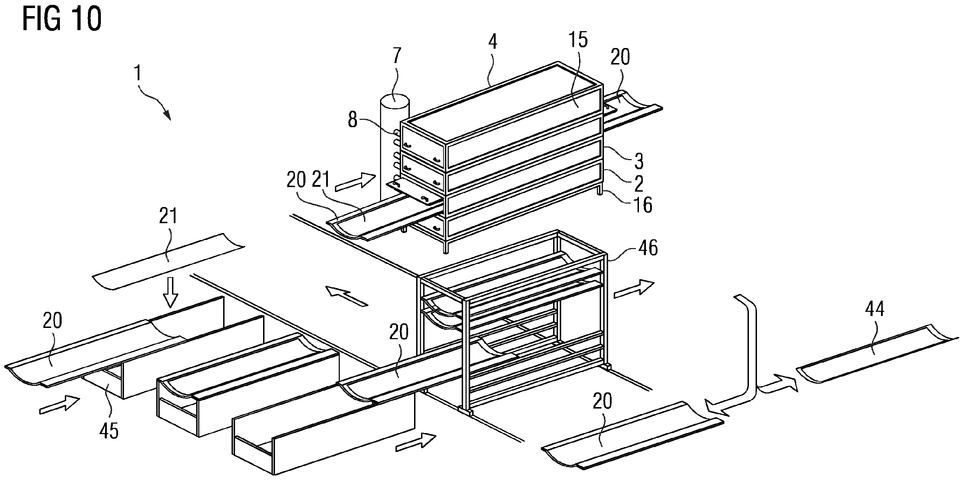

In fig. 10, an embodiment of a method for manufacturing preform building elements used for building a rotor blade of a wind turbine is shown.

Since for the manufacturing of a rotor blade a plurality of preform building elements 44 are required, a manufacturing of the individual preform building elements 44 occurs at least partly simultaneous to produce within a given time all preform building elements required for the manufacturing of the rotor blade, or a rotor blade part, respectively. In a production facility, a plurality of mold racks 45 is provided. On each of the mold racks 45, one plate-like carrier 20 is arranged. On a top surface of the carrier 20, the preform building material 21 is arranged in accordance to the preform building element 44 to be fabricated. After finishing the arrangement of the preform building material 21, the carrier 20 is transported to the oven arrangement 1 used for activation of the binding agent, which is arranged between the textile layers and/or the core components of the preform building material 21. Therefore, the carriers 20 may be arranged in a transport rack 46 allowing to transporting a plurality of carriers 20 simultaneously.

By using the transport rack 46, the carrier 20 may be transported to the oven arrangement 1. In addition or alternatively, also the oven arrangement 1 may be moved towards the carrier elements 20, for instance when the oven arrangement 1 comprises a rack 16 with rollers 47 as previously described.

The oven arrangement 1 comprises a plurality of oven units 2, 3, 15, which are stacked on top of each other. The openings 5 of the housings 4 of the oven units 2, 3, 15 are arranged above each other on the same side of the stack of oven units 2, 3, 15 so that the loading of the carriers 20, or the preform building material 21 arranged on the top surface of the carriers 20, respectively, into the oven units 2, 3, 15 is facilitated. By providing individual oven units 2, 3, 15 for heating the preform building material 21, different heating processes, for instance different temperatures, different temperature gradients or temperature courses and different process times, may be used for heating the different preform building material arrangements on the individual carriers 20.

After the heating step has been performed, the carriers 20 can be removed, in particular from additional openings 5 arranged at opposing sides 12 of the housing 4. After being removed from the oven arrangement 1, the preform building elements 44 may be cooled and/or transported towards a storage position and/or to a blade mold for fabrication of the rotor blade. The carrier 12 may be returned to the mold racks 45 to be used again for fabrication of a further preform building element 44.

For manufacturing of the preform building elements 44, any of the aforementioned described embodiments of the oven arrangement 1 and/or any combination thereof may be used.

The modular oven arrangement 1 with the individual oven units 2, 3, 15 may be easily adapted to different manufacturing processes. The number of over units 2, 3, 15 may advantageously be adapted to the number of carriers 20 that are loaded into the oven arrangement 1 simultaneously and/or during overlapping time slots. The modular design of the oven arrangement 1 allows to switch off oven units, which are not used in the current process, to avoid unnecessary consumption of energy. In addition, also an adaption to the process cycle is easily possible by adding and/or removing an oven unit.

Although the present invention has been described in detail with reference to the preferred embodiment, the present invention is not limited by the disclosed examples from which the skilled person is able to derive other variations without departing from the scope of the invention.

## Claims

1. Oven arrangement, adapted to heat preform building material (21) arranged on a plurality of transportable, plate-like carriers (20) for producing preform building elements (44) used for building a rotor blade of a wind turbine, comprising at least two oven units (2, 3, 15), wherein each oven unit (2, 3, 15) has a housing (4) adapted to receive one or more carriers (20) with at least one closable opening (5) for loading and unloading the carriers (20), wherein the housings (4) of the oven units (2, 3, 15) are stackable in such manner that the openings (5) are arranged above each other on one side of the stack, wherein each oven unit (2, 3, 15) comprises at least one heating means (33) and/or wherein each oven unit (2, 3, 15) is connectable to a mutual heat supplying means (7).

2. Oven arrangement according to claim 1, **characterized in that** each housing (4) comprises at least one attachment means (10, 11) on a bottom side of the housing and/or on a top side of the housing (4), wherein the attachment means (10, 11) fixate the stacked oven units (2, 3, 15) against each other.

3. Oven arrangement according to claim 1 or 2, **characterized in that** each housing comprises two closable openings (5), which are arranged on opposing sides (12, 13) of the housing (4).

4. Oven arrangement according to one of the preceding claims, **characterized in that** the heating means (33) comprises at least one resistive heating means (36), at least one radiating heating means (34), at least one heating means based on a circulating liquid, and/or at least one convection means (35).

5. Oven arrangement according to one of the preceding claims, **characterized in that** the heat supplying means (7) is a hot air supplying means, wherein the housing (4) of each oven unit (2, 3, 15) comprises at least one air inlet (8), through which hot air generated by the heat supplying means is suppliable to the interior of the housing (4), and at least one air outlet (30), through which hot air supplied to the interior of the housing (4) is emittable to the surroundings of the oven unit (2, 3, 15) and/or returnable to the heating means (7).

6. Oven arrangement according to claim 5, **characterized in that** each oven unit (2, 3, 15) comprises a regulation means (31) for regulating the temperature and/or the flow rate of the air provided to its air inlet (8).

7. Oven arrangement according to claim 5 or 6, **characterized in that** the air inlets (8) and the air outlets (30) are arranged at opposing sides (12, 13, 14) of the housing (4) and/or at opposing edges of a housing side (12, 13, 14) .

8. Oven arrangement according to one of the claims 5 to 7, **characterized in that** the air inlets (8) and/or the air outlets (30) are each arranged on the same side of the stacked oven units (2, 3, 15).

9. Oven arrangement according to one of the claims 5 to 8, **characterized in that** the oven arrangement comprises at least one flow reverse means (29) to invert the air flow between the air inlet (8) and the air outlet (30) of at least one of the oven units (2, 3, 15).

10. Oven arrangement according to one of the claims 5 to 9, **characterized in that** the air inlets (8) and/or the air outlets (30) are arranged at a cover (6) of the or a closeable opening (5) and/or at an edge surrounding the or a closeable opening (5), wherein at least one air stream guiding means (18) is arranged in the interior of the housing (4) in between the air inlets (8) and/or the air outlets (30) and a receiving space (19), in which a received carrier (20) is arranged.

11. Oven arrangement according to claim 10, **characterized in that** the air stream guiding means (18) is a plate (22), wherein the plate (22) is removably attached to the housing (4), wherein the plate (22) comprises a plurality of slots (23), in particular for creation of a laminar air flow in the receiving space (19).

12. Oven arrangement according to claim 10, **characterized in that** the air stream guiding means (18) is a guiding plate (50) with a plurality of slots (23), in particular for creation of a laminar airflow in the receiving space (19), wherein the guiding plate (50) is attached to a removable cover (6) of the opening (5) in a distance to a cover plate (49) of the cover (6) for closing the opening (5), wherein the air inlets (8) or the air outlets (30) communicate with the space between the guiding plate (50) and the cover plate (49).

13. Oven arrangement according to one of the preceding claims, **characterized in that** each housing (4) comprises at least one receiving means (28) adapted to receive at least one carrier (20).

14. Oven arrangement according to claim 13, **characterized in that** the receiving means (28) comprises at least one pair of rails for guiding the edges of the carrier (20) and/or that the receiving means (28) comprises a plurality of rollers (37), in particular rollers (37) attached to wires (38) spanned in the interior of the housing (4) between two opposing sides of the housing (4).

15. Oven arrangement according to one of the preceding claims, **characterized in that** the stack of oven units (2, 3, 15) is arranged on at least one movable transportation means, in particular on a rack (16) with wheels (47).

16. Oven arrangement according to one of the preceding claims, **characterized in that** at least one of the oven units 2, 3, 15) comprises a modular housing (4) comprising two or more housing segments (39, 40) removably attached to each other.

17. Method for manufacturing preform building elements (44) used for building a rotor blade of a wind turbine, comprising the steps of:
- Providing preform building material (21) on a plurality of transportable, plate-like carriers (20),
- Loading the plurality of carriers (20) with the arranged preform building material (21) into an oven arrangement (1) comprising a plurality of oven units (2, 3, 15), wherein at least one carrier (20) is arranged in each of the oven units (2, 3, 15), and
- Heating the preform building material (21) in each oven unit (2, 3, 15) for a duration and/or with a temperature or temperature profile assigned to the preform building material (21) in the oven unit (2, 3, 15).

18. Method according to claim 17, wherein an oven arrangement (1) according to one of the claims 1 to 16 is used.
